Europäisches Patentamt

European Patent Office

Office européen des brevets

(11) Veröffentlichungsnummer: **0 402 306**
**A1**

## (12) EUROPÄISCHE PATENTANMELDUNG

(21) Anmeldenummer: 90810169.4

(51) Int. Cl.⁵: **A62D 3/00**

(22) Anmeldetag: 05.03.90

(30) Priorität: 05.06.89 CH 2119/89

(43) Veröffentlichungstag der Anmeldung:
12.12.90 Patentblatt 90/50

(84) Benannte Vertragsstaaten:
AT BE CH DE ES FR GB GR IT LI LU NL SE

(71) Anmelder: Funderburk, Raymond F.
32522 McAllister Road, P.O. Box 1247
Brookshire, TX.(US)

(72) Erfinder: Funderburk, Raymond F.
32522 McAllister Road, P.O. Box 1247
Brookshire, TX.(US)

(74) Vertreter: Punschke, Edgar Patentanwalt
Löwenstrasse 1
CH-8021 Zürich(CH)

(54) **Verfahren und Aktivsubstanz zur Verfestigung und Immobilisierung von Sonderabfällen aus der flüssigen oder halbflüssigen Phase.**

(57) Verfahren zur Immobilisierung eines in einem flüssigen oder halbflüssigen organischen Gemisch als Verunreinigung enthaltenen Sonderabfalls, wobei der flüssige oder halbflüssige Sonderabfall mit Kombinationen aus Kalziumchlorid, Kalziumformiat, Glyzerin, Pentaerythrit, 1,2-Propandiol und Pluronic (Synperonic), Wasser, sowie einem zementartigen Material, wie zum Beispiel Portlandzement, Flugasche oder Zementofenstaub gemischt wird. Diese verschiedenen Chemikalienmischungen, Wassergehalte und zementartige Materialien verfestigen das Ausgangsmaterial, wobei die im organischen Gemisch enthaltenen Sonderabfälle immobilisiert werden und sich deren Auslaugbarkeit in der resultierenden Mischung vermindert.

EP 0 402 306 A1

# Verfahren und Aktivsubstanz zur Verfestigung und Immobilisierung von Sonderabfällen aus der flüssigen oder halbflüssigen Phase

Die Erfindung betrifft Verfahren zur Immobilisierung von flüssigen oder halbflüssigen Sonderabfällen in einem organische Substanzen enthaltenden Gemisch, gemäss den Oberbegriffen der Ansprüche 1 bzw. 24. Ferner betrifft die Erfindung eine dazu geeignete Aktivsubstanz. Verfahren und Aktivsubstanz dienen insbesondere zur physikalischen Umwandlung des Zustandes und der chemischen Einbindung einer organische Substanzen enthaltenden Grundmasse, welche mit gefährlichen Stoffen verunreinigt ist.

Seit vielen Jahren werden Wege zur Entsorgung von Sonderabfällen unter Verwendung von pozzolanischen Materialien gesucht. Bereits früher wurde gezeigt, dass die Verfestigung von organischen Sonderabfällen in Form von Flüssigkeiten, Aufschlämmungen, Schlämmen und anderen nichtfesten Formen durch Mischen der anorganischen Sonderabfälle mit zementartigen Materialien wie Portlandzement, Flugasche, Zementofenstaub, Kalk oder mittels einer Kombination dieser pozzolanischen Materialien möglich ist. Als Beispiel sei auf U.S. Patent 4'240'952, verwiesen. Eine typische Mischung könnte einen Teil Abfall und zwei oder mehr Teile zementartiger Materialien enthalten. Die relativen Anteile der den anorganischen Flüssigkeiten zugesetzten zementartigen Materialien werden üblicherweise durch den Wassergehalt der Flüssigkeit und durch den in der Flüssig keit enthaltenen Anteil aufgeschlämmter Feststoffe bestimmt. Falls der anorganische Sonderabfall sehr wässrig ist, wird normalerweise ein hoher Anteil an zementartigen Materialien benötigt, um den Wasseranteil zu binden. Dadurch ergibt sich in der Regel eine starke Erhöhung des Volumens solcher Sonderabfälle nach der Behandlung.

Es war auch bereits früher bekannt, dass gewisse Additive dazu eingesetzt werden können, die Dauer der Abbindung zu verkürzen und die Aushärtung der mit einem oder mehreren zementartigen Materialien abgemischten anorganischen Sonderabfälle zu beschleunigen. Einige der gebräuchlicheren Beschleuniger sind Kalziumchlorid, Natriumkarbonat, Natriumsilikat, Natriummetasilikat, Natriumhydroxyd sowie Triäthanolamin. Es ist weiter bekannt, dass diese Beschleuniger in Konzentrationen zwischen 5 % und 10 % basierend auf der Trockensubstanz den zementartigen Materialien zugesetzt werden.

In der Vergangenheit wurden verschiedene Versuche unternommen, die Technologie der Verfestigung von anorganischen Sonderabfällen für die Verfestigung von gefährlichen Stoffen in einer organische Substanzen enthaltenden Grundmasse anzupassen. Dabei wird eine Mischung von organischem Sonderabfall als eine Mischung von Abfallstoffen definiert, welche auf organischem Kohlenstoff basierende Moleküle enthält. Auch wenn mittels grosser Mengen reinen Portlandzements versucht wird, den organischen Sonderabfall zu verfestigen, so bleiben die behandelten Muster in einem plastischen Zustand und härten nicht aus. Bisherige Forschungsergebnisse zeigten, dass organische Stoffe dazu neigen, den Zementierungsprozess zu stören und die ent sprechende chemische Reaktion soweit zu hemmen, dass es zu einer verzögerten Abbindung kommt. Es existiert nur wenig Literatur, welche sich mit der Verzögerung der Abbindungsreaktion durch den Einfluss von organischen Verbindungen befasst, und noch weniger Literatur zu den chemischen oder physikalischen Möglichkeiten zur Verhinderung einer verzögerten Abbindung.

J.H. Taplin: Diskussion des Vortrages von H.E. Vivian am Vierten Internationalen Symposium für Zementchemie, Washington D.C., U.S. National Bureau of Stds. Monogr. 43, Band II (1962), Seite 924, sowie B. Blank et. al.: "Adsorption of Admixtures on Portland Cement", American Ceramics Society, Band 46 (1963, Brüssel), Seite 395. Publikation 61/68 der Bldg. Res. Station (England) präsentierten Forschungsergebnisse, welche die Inhibition der Abbindung durch organische Verbindungen als Folge einer Schichtbildung um die zementartigen Partikel und der dadurch verhinderten Energieabgabe dokumentieren. Beide postulierten, dass der Verzögerungseffekt durch organische Verbindungen von der Adsorption der organischen Moleküle auf den kristallinen Teilchen herrührt. Kalzium-Sulfoaluminathydrate, welche durch Hydratation aus Kalziumhydroxid und Kalziumsulfat gebildet werden, sollen für die starke Adsorption und ausgeprägte Schichtbildung verantwortlich sein.

Kalziumchlorid ist in der Zementindustrie schon seit langem bekannt und gleichzeitig der meistverwendete Beschleuniger zur Verkürzung der Abbindungszeit bei Beton. Auch beschrieben zum Beispiel Hulbert et al. im U.S. Patent 4'240'952, dass Kalziumchlorid zum Aufbrechen der Sulfoaluminatschicht, welche die Zementpartikel umgibt, eingesetzt werden kann. Hulbert er wähnte, dass durch Zusatz von 3 Gewichtprozenten Gips im Verhältnis zur verwendeten Flugasche die Entfernung der Sulfoaluminatschicht, welche die Hydration der Mischung verhindert, erreicht wird.

Wenn der Flugasche Wasser zugesetzt wird, so setzen rasch ablaufende chemische Reaktionen ein, wie sie W.C. Webster in U.S. Patent Nr. 4'354'876 beschrieben hat: "Reaktionen, die den schnellabbindenden Eigenschaften von ungenügend kalziniertem oder reguliertem Portlandzement ähneln". Wie von Webster beschrieben, wird dieses Phänomen der Schnellabbindung vor allem bei Flugasche aus der Verbrennung von subbitumöser Kohle oder Braunkohle beobachtet. Als Folge der raschen Abbindung bleibt ein grosser Teil der Energie, die abgegeben werden könnte, wenn die Zeit dafür ausreichen würde, gefangen. Ausserdem bildet sich während der Hydratation eine Schicht aus Sulfoaluminat, was den Abkapselungseffekt und die Blockierung der Abgabe der vollen Zementierungsenergie weiter verstärkt. Bei bituminösen Flugaschen fehlt der höhere Kalziumoxid- und Kalziumsulfatgehalt, so dass bei Zugabe von Wasser keine rasche Abbindung stattfindet.

1967 zeigte M.H. Roberts in "Effect of Admixtures on the Composition of the Liquid Phase and the Early Hydration Reactions in Portland Cement Pastes", Rilem Symposium on Admixtures for Mortar and Concrete (1967), dass der Zusatz von Saccharose die Kalzium- und Tonerdekonzentrationen in Lösung über das normale Niveau hinaus anzuheben vermag. Weitere Arbeiten aus dem Jahr 1972 von J.F. Young: J. Amer. Ceram. Soc., Band 53, Seite 65 (1970), und J.F. Young: "A Review of the Mechanisms of Set-Retardation in Portland Cement Pastes Containing Organic Admixtures", Cement Concr. Res., Band 2 (1972), Seiten 415-433, zeigten, dass die Bildung von Trikalziumaluminat, einer der wichtigsten kristallinen Strukturen bei der Zementierung von Flugasche, durch Zusatz von anderen zuckerartigen Produkten, wie Bernsteinsäure und Weinsäure in Kombination mit Saccharose, erhöht werden kann. Die Arbeiten von Roberts und Young deckten die Möglichkeit auf, die Kristallbildung durch den Einsatz von Zuckerverbindungen zu erhöhen, da hierdurch die zementartigen Materialien länger in Suspension gehalten werden.

Der bisherige Stand der Technik beschreibt keine wirksame Methode zur Verfestigung und Immobilisierung von organischen Sonderabfällen durch Umwandlung in einen homogenen Feststoff.

Es ist Aufgabe der Erfindung, eine Kombination von Verbindungen aufzuzeigen, welche dazu geeignet ist, in Gegenwart von Portlandzement oder Flugasche gefährliche Stoffe in einer organische Substanzen enthaltenden Grundmasse zu verfestigen und teilweise oder vollständig zu immobilisieren. Eine weitere Aufgabe der Erfindung ist es, eine Methode zur Verfestigung und teilweisen oder vollständigen Immobilisierung von verschiedenen in einer organische Substanzen enthaltenden Grundmasse als Verunreinigung enthaltenen gefährlichen Sonderabfällen aufzuzeigen.

Diese Aufgabe wird erfindungsgemäss durch die in den Patentansprüchen 1, 24 und 31 definierten Merkmale gelöst.

Einzelheiten der Erfindung werden im folgenden anhand bevorzugter Ausführungsbeispiele beschrieben.

Allgemein werden Verfahren und eine Mischung beschrieben, welche sich für die Immobilisierung von flüssigen organischen Sonderabfällen in einer organische Substanzen enthaltenden Grundmasse eignen. Bei der Anwendung des Verfahrens wird üblicherweise zuerst von einer Mischung aus Wasser, einem Additiv zur Beschleunigung der Hydration des zementartigen Materials wie zum Beispiel Kalziumchlorid oder Kalziumformiat, einem Additiv zur Verzögerung der Schnellabbindung wie zum Beispiel Glyzerin oder Pentaerythrit und einem Zusatzstoff zur Herabsetzung der Permeabilität wie zum Beispiel 1,2-Propandiol oder Pluronic (Synperonic) ausgegangen. Diese erste Mischung wird anschliessend mit dem flüssigen oder halbfesten Sonderabfall zu einer homogenen zweiten Mischung vermischt; dann wird ein zementartiges Material wie Portlandzement, Flugasche oder Zementofenstaub zu dieser zweiten Mischung zugemischt. Durch das Zusammengeben der ersten Mischung mit dem flüssigen oder halbfesten Sonderabfall entsteht ein Produkt, in welchem die in der organischen Mischung enthaltenen Verunreinigungen immobilisiert sind.

Das Verfahren der bevorzugten Ausführungsform beinhaltet eine Reihe von chemischen Reaktionen, welche durch Zugabe von Chemikalien und zementartiger Materialien zu einer mit verschiedenen Sonderabfällen verunreinigten organischen Mischung eingeleitet werden. Die Chemikalienmischung, welche aus Kalziumchlorid, Kalziumformiat, Glyzerin, Pentaerythrit, 1,2-Propandiol sowie Pluronic (Synperonic) zusammengesetzt sein kann, wird vorerst der Abfallmischung zugegeben und anschliessend gründlich gemischt, bis daraus eine Masse von homogener Konsistenz entstanden ist. Wie hier verwendet, ist Pluronic besser unter dem Markennamen Synperonic bekannt. Mit Vorteil wird, falls der Wassergehalt der organischen Mischung mit den gefährichen Verunreinigungen weniger als vierzig Prozent (40 %) beträgt, zusätzlich Wasser zugegeben, bis der Wasseranteil beim Einmischen der Chemikalien vierzig Prozent (40 %) erreicht. Andererseits sind wir der Ansicht, dass der Wassergehalt auch bloss dreissig Prozent (30 %) betragen kann. Anschliessend wird ein zementartiges Material wie zum Beispiel Portlandzement, Flugasche oder Zementofenstaub zugesetzt. Während das zementartige Material mit dem in der Mischung vorhandenen Wasser reagiert, werden Kalzium und Tonerde freigesetzt und in Suspension gehalten, damit sämtliche potentiell vorhandene Energie voll für eine optimale Zementierungsreaktion zur Verfügung steht.

Glyzerin und Pentaerythrit verhindern eine frühzeitige Bildung von Trikalziumsilikat und Trikalziumaluminat, tragen aber später zur Entwicklung dieser Kristalle bei. Der Zusatz von Kalziumchlorid und Kalziumformiat führt zu chemischen Reaktionsbedingungen, welche die Hydration von Trikalziumsilikat beschleunigen. Ausserdem bewirkt der Zusatz dieser Stoffe den Abbau einer Schicht oder eines dicken Films aus Kalziumlignosulfat, welche sich durch Adsorption auf dem Trikalziumsilikat und dem Trikalziumaluminat bilden. Diese Verbindungen bewirken auch morphologische Veränderungen in den zementartigen Kristallen, welche normalerweise als zigarrenförmige Hohlkörper in Erscheinung treten. Die Kristalle sind verändert und flacher, wobei die verdichtete Oberfläche fünf mal grösser als zuvor ist. Diese verbesserte Morphologie der Oberfläche ergibt eine beträchtlich vergrösserte Anlagerungsfläche und unterstützt dadurch die Bindung der mikroenkapsulierten Moleküle.

Durch die Zugabe von Glyzerin oder Pentaerythrit erhöht sich die Löslichkeit von Kalzium und Tonerde in der Lösung, wodurch eine verbesserte Effizienz in der Kristallentwicklung erreicht wird. Da diese Verbindungen in der Lage sind, Trikalziumaluminat und Trikalziumsilikat über einen längeren Zeitraum hinweg in Suspension zu halten, entsteht nach der Aushärtung eine kompakte, starke Masse. Der Zusatz von 1,2-Propandiol oder Pluronic (Synperonic) erzeugt eine dichte Masse mit niedriger Permeabilität und Porosität. Beide Substanzen tragen ebenfalls zur Bindung bei.

Verschiedene Kombinationen von Kalziumchlorid, Kalziumformiat, Glyzerin, Pentaerythrit, 1,2-Propandiol und Pluronic (Synperonic) kommen im Rahmen dieser Erfindung in Betracht. Als Beispiele werden achtzehn verschiedene Kombinationen in der nachstehenden Tabelle aufgezeigt:

| Kombinationen von Verbindungen im Verfahren (als Gramm ausgedrückt) | | | | | | | | | |
|---|---|---|---|---|---|---|---|---|---|
| Kombinationsnummer: | 1 | 2 | 3 | 4 | 5 | 6 | 7 | 8 | 9 |
| KALZIUMCHLORID KALZIUMFORMIAT | 24 | 24 | 24 | 24 | 24 | 24 | 24 | 24 | 24 |
| GLYZRIN | 12 | | 6 | 12 | | 6 | 12 | | 6 |
| PENTAERYTHRIT | | 12 | 6 | | 12 | 6 | | 12 | 6 |
| 1,2-PROPANDIOL | 6 | 6 | 6 | | | | 3 | 3 | 3 |
| PLURONIC (SYNPERONIC) | | | | 6 | 6 | 6 | 3 | 3 | 3 |
| Total Gramm je | 42 | 42 | 42 | 42 | 42 | 42 | 42 | 42 | 42 |
| Kombinationsnummer: | 10 | 11 | 12 | 13 | 14 | 15 | 16 | 17 | 18 |
| KALZIUMCHLORID KALZIUMFORMIAT | 24 | 24 | 24 | 24 | 24 | 24 | 24 | 24 | 24 |
| GLYZERIN | 12 | | 6 | 12 | | 6 | 12 | | 6 |
| PENTAERYTHRIT | | 12 | 6 | | 12 | 6 | | 12 | 6 |
| 1,2-PROPANDIOL | 6 | 6 | 6 | | | | 3 | 3 | 3 |
| PLURONIC (SYNPERONIC) | | | | 6 | 6 | 6 | 3 | 3 | 3 |
| Total Gramm je | 42 | 42 | 42 | 42 | 42 | 42 | 42 | 42 | 42 |

Aus diesen Verbindungen hergestellte Kombinationen werden mit einem in einer organischen Mischung enthaltenen flüssigen oder halbflüssigen organischen Sonderabfall vermischt, wobei das so entstandene Gemisch anschliessend mit zementartigen Materialien wie Portlandzement, Flugasche oder Zementofenstaub versetzt wird. In einer Verkörperung dieser Erfindung werden zehn bis zwanzig Teile zementartiges Material einem Teil der kombinierten Mischung zugesetzt. Des weiteren ist vorgesehen, dass die Sonderabfälle im Verhältnis von einem, zwei oder drei Teilen Sonderabfall zu einem Teil zementartigen Materials zugesetzt werden.

BEISPIEL:

In einem organischen Gemisch, welches bis zu zehn Gewichtsprozent (10%) Oele und Fette enthält, wurde ein Gehalt von 15'800 ppm Barium festgestellt. Durch Anwendung von zwei der oben erwähnten Kombinationen wurden die folgenden Mischungen hergestellt:

Mischung # 1
300 Gramm organische Mischung mit Barium
150 Gramm Portlandzement
20 Gramm Kombinationsprodukt Nr. 1
100 Gramm $H_2O$

4

Mischung # 2

300 Gramm organische Mischung mit Barium

100 Gramm Flugasche

10 Gramm Kombinationsprodukt Nr. 10

100 Gramm $H_2O$

Mischung # 3

300 Gramm organische Mischung mit Barium

150 Gramm Flugasche

20 Gramm Kombinationsprodukt Nr. 1

100 Gramm $H_2O$

Die Mischungen wurden während sieben Tagen ausgehärtet, bis eine Druckfestigkeit von über 500 psi erreicht worden war. Mit den Mustern wurde anschliessend der Auslaugungstest für toxische Stoffe ("TCLP"-Test) gemäss U.S. Umweltschutzbehörde "Environmental Protection Agency" durchgeführt. Die Ergebnisse aus dem TCLP-Test für alle drei Mischungen bestätigten, dass nach der Behandlung die im Auslaugungswasser gefundenen (extrahierte) Mengen Barium wesentlich geringer waren als vor der Behandlung. Es wurden folgende Messergebnisse erhalten:

Mischung # 1

12,441 Teile Barium pro Million

Mischung # 2

2,600 Teile Barium pro Million

Mischung # 3

3,519 Teile Barium pro Million

Wie aus diesem Beispiel deutlich hervorgeht, liegen bei allen drei Mischungen die durch Auslaugung erhaltenen Bariumkonzentrationen weit unter den von dem von der Enviromental Protection Agency aufgestellten Grenzwert für Barium von 100 Teilen pro Million im Auslaugungswasser.

Zur Prüfung der Druckfestigkeit der mit dem hier beschriebenen Verfahren hergestellten Muster, wurde ein für den Zweck künst lich aufbereitetes Abfallmuster bestehend aus zwei Schwermetallen und einer organischen Verbindung zu Referenzzwecken verwendet. Es wurden identische Muster mit der folgenden Zusammensetzung hergestellt:

A) 90 Gramm $ZnCl_2$ (Zinkchlorid)

B) 0,98 Gramm $CdCl_2$ (Kadmiumchlorid)

C) 2,4 Gramm $C_6H_5ClO$ (Parachlorphenol)

Jedes Muster wurde anschliessend in 222 Gramm Wasser, welches zur Auflösung des $C_6H_5ClO$ noch 0,75 Gramm NaOH enthielt, aufgelöst. Schliesslich wurden die Muster mit $H_2O$ auf ein Gesamtgewicht von je 1'200 Gramm ergänzt.

Anschliessend wurde jedes der Sonderabfallmuster mit 120 Gamm der in dieser Erfindung beschriebenen Chemikalienkombinationen versetzt (42 Gramm Chemikalien plus Ergänzung mit 78 Gramm $H_2O$ auf ein Gesamtgewicht von 120 Gramm). Daraus ergibt sich ein Mischungsverhältnis von zehn Teilen (1'200 Gramm) Sonderabfall auf einen Teil (120 Gramm) der Chemikalienmischung. Nach gründlicher Durchmischung des Sonderabfalls und der Zusatzstoffe wurde dem daraus entstandenen Gemisch jeweils 1'200 Gramm Portlandzement hinzugegeben.

Auf diese Weise wurden insgesamt achtzehn verschiedene Muster hergestellt, welche die achtzehn in dieser Erfindung beschriebenen Chemikalienkombinationen darstellen. Jedes der Muster hatte ein Gesamtgewicht von 2'520 Gramm (1'200 Gramm Sonderabfall / 1'200 Gramm Zement / 120 Gramm Chemikalienmischung). Jedes der Muster wurde während zehn Tagen ausgehärtet. Danach wurde die Druckfestigkeit an den freistehenden Mustern nach der ASTM-Methode D2166-85 bestimmt (Unconfined Compressive Strength Test Method). Die nachfolgende Tabelle stellt die erhaltene Druckfestigkeit dar:

5

| CHEMIKALIENKOMBINATION NR. | PSI |
|---|---|
| 1 | 1000 |
| 2 | 740 |
| 3 | 827 |
| 4 | 696 |
| 5 | 638 |
| 6 | 696 |
| 7 | 755 |
| 8 | 696 |
| 9 | 900 |
| 10 | 1233 |
| 11 | 943 |
| 12 | 1161 |
| 13 | 1262 |
| 14 | 943 |
| 15 | 1030 |
| 16 | 1262 |
| 17 | 1045 |
| 18 | 1016 |

Aehnliche Prüfungen der Druckfestigkeit und Reduktion der Toxizität wurden mit einer Reihe der in dieser Erfindung beschriebenen Chemikalienmischungen mit unterschiedlichen Arten von Sonderabfall durchgeführt, wobei dasselbe Mischverhältnis beibehalten wurde. Die nachfolgende Tabelle fasst die bei der TCLP-Auslaugung erreichte Verminderung der Toxizität mit acht verschiedenen Schwermetallen zusammen:

| | VORHER | EPA TOXISCHER GRENZWERT | NACHKOMBINIERTER MISCHUNG (Auslaugung) |
|---|---|---|---|
| VERUNREINIGUNG | (ppm) | (ppm) | (ppm) |
| Arsen | 11,8 | 5,0 | 0,001 |
| Barium | 15 800,0 | 100,0 | 2,600 |
| Kadmium | 13,2 | 1,0 | 0,28 |
| Chrom | 68,0 | 5,0 | 0,132 |
| Blei | 265,0 | 5,0 | 0,503 |
| Quecksilber | 1,2 | 0,2 | 0,008 |
| Selen | 2,0 | 1,0 | 0,005 |
| Silber | 7,5 | 5,0 | 0,038 |

Diese Ergebnisse beweisen die Wirksamkeit der Erfindung bezüglich der Immobilisierung von in flüssigen oder halbflüssigen organischen Mischungen enthaltenen gefährlichen Verunreinigungen. Gewisse andere Stoffe können die hier vorgestellten Verbindungen ersetzen, ohne dadurch wesentlich vom Konzept der vorliegenden Erfindung abzuweichen. So können beispielsweise auch andere Verbindungen anstelle von Kalziumchlorid oder Kalziumformiat zur Beschleunigung der Hydration des Trikalziumsilikats im Portlandzement zum Einsatz kommen, ohne dass dadurch das mechanistische Wirkungsprinzip von Glyzerin oder Pentaerythrit tangiert wird.

Da eine Vielzahl verschiedener Ausführungen und Variationen im Rahmen der hier offengelegten Erfindung möglich sind, einschliesslich der Verwendung äquivalenter Kombinationen oder Materialien, an die zu einem späteren Zeitpunkt gedacht wird, und da viele Aenderungen in der hier beschriebenen Ausführung in Anpassung an gesetzliche Bestimmungen möglich sind, wird ausdrücklich festgehalten, dass die hier beschriebenen Einzelheiten lediglich als Beispiele gelten und keinen einschränkenden Charakter haben.

**Ansprüche**

1. Verfahren zur Immobilisierung von flüssigen oder halbflüssigen Sonderabfällen in einer organischen Mischung, gekennzeichnet durch folgende Verfahrensschritte:

A. Zubereitung einer ersten Mischung aus Wasser, einer Komponente zur Beschleunigung der Hydration von zementartigen Materialien, einer Komponente zur Verzögerung der Schnellabbindung zementartigen Materials sowie einer Komponente zur Herabsetzung der Permeabilität;

B. Zubereitung einer im wesentlichen homogenen zweiten Mischung aus Sonderabfällen und der genannten ersten Mischung; sowie

C. Mischen der genannten zweiten Mischung mit einem zementartigen Material.

2. Verfahren nach Anspruch 1, dadurch gekennzeichnet, dass das Mischungsverhältnis der einzelnen Komponenten etwa den folgenden Gewichtsprozenten entspricht:

| Wasser | 65 % |
|---|---|
| Kalziumchlorid | 20 % |
| Glycerin | 10 % |
| 1,2-Propandiol | 5 % |

3. Verfahren nach Anspruch 2, dadurch gekennzeichnet, dass das Mischungsverhältnis zwischen der genannten ersten Mischung und den Sonderabfällen zwischen zwanzig und fünfzig Volumenprozent der Sonderabfälle auf ein Volumenteil der erwähnten ersten Mischung beträgt.

4. Verfahren nach Anspruch 3, dadurch gekennzeichnet, dass das Mischungsverhältnis der genannten zweiten Mischung zum genannten zementartigen Material eins bis vier Volumenteile des erwähnten zementartigen Materials auf ein Volumenteil der erwähnten zweiten Mischung beträgt.

5. Verfahren nach Anspruch 4, dadurch gekennzeichnet, dass es sich beim Sonderabfall um Parachlorphenol handelt.

6. Verfahren nach Anspruch 1, dadurch gekennzeichnet, dass in einem weiteren Verfahrensschritt Wasser zur genannten zweiten Mischung und dem genannten zementartigen Material hinzugemischt wird.

7. Verfahren nach Anspruch 1, dadurch gekennzeichnet, dass das Verhältnis der einzelnen Komponenten der genannten ersten Mischung im wesentlichen den folgenden Gewichtsprozenten entspricht:

| Wasser | 65 % |
|---|---|
| Kalziumchlorid | 20 % |
| Pentaerythrit | 10 % |
| 1,2-Propandiol | 5 % |

8. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 5 % |
| Pentaerythrit | 5 % |
| 1,2-Propandiol | 5 % |

9. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 10 % |
| Pluronic (Synperonic) | 5 % |

10. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Pentaerythrit | 10 % |
| Pluronic (Synperonic) | 5 % |

11. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 5 % |
| Pentaerythrit | 5 % |
| Pluronic (Synperonic) | 5 % |

12. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 10 % |
| 1,2-Propandiol | 2,5 % |
| Pluronic (Synperonic) | 2,5 % |

13. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Pentaerythrit | 10 % |
| 1,2-Propandiol | 2,5 % |
| Pluronic (Synperonic) | 2,5 % |

14. Verfahren nach Anspruch 1, dadurch gekennzeichnet, dass das Verhältnis der Komponenten der genannten ersten Mischung im wesentlichen den folgenden Gewichtsprozenten entspricht:

8

| Wasser. | 65 % |
|---|---|
| Kalziumchlorid | 20 % |
| Glycerin | 5 % |
| Pentaerythrit | 5 % |
| 1,2-Propandiol | 2,5 % |
| Pluronic (Synperonic) | 2,5 % |

15. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 10 % |
| 1,2-Propandiol | 5 % |

16. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Pentaerythrit | 10 % |
| 1,2-Propandiol | 5 % |

17. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 5 % |
| Pentaerythrit | 5 % |
| 1,2-Propandiol | 5 % |

18. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 10 % |
| Pluronic (Synperonic) | 5 % |

19. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Pentaerythrit | 10 % |
| Pluronic (Synperonic) | 5 % |

20. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 5 % |
| Pentaerythrit | 5 % |
| Pluronic (Synperonic) | 5 % |

21. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 10 % |
| 1,2-Propandiol | 2,5 % |
| Pluronic (Synperonic) | 2,5 % |

22. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Pentaerythrit | 10 % |
| 1,2-Propandiol | 2,5 % |
| Pluronic (Synperonic) | 2,5 % |

23. Verfahren nach Anspruch 1, dadurch gekennzeichnet, dass das Verhältnis der Komponenten der genannten ersten Mischung im wesentlichen den folgenden Gewichtsprozenten entspricht:

| Wasser | 65 % |
|---|---|
| Kalziumchlorid | 20 % |
| Glycerin | 5 % |
| Pentaerythrit | 5 % |
| 1,2-Propandiol | 2,5 % |
| Pluronic (Synperonic) | 2,5 % |

24. Verfahren zur Immobilisierung von gefährlichen Abfallstoffen, welche in flüssigem oder halbflüssigem organischem Ausgangsmaterial als Verunreinigungen enthalten sind, gekennzeichnet durch folgende Verfahrensschritte:

A. Mischen des Ausgangsmaterials mit Kalziumchlorid, Wasser, Glyzerin und 1,2-Propandiol und Bildung einer im wesentlichen homogenen Mischung; sowie

B. Mischen der unter A. erhaltenen homogenen Mischung mit zementartigem Material zwecks Umwandlung in einen Feststoff.

25. Verfahren nach Anspruch 24, dadurch gekennzeichnet, dass das zementartige Material aus der Gruppe bestehend aus Flugasche, Zementofenstaub und Portlandzement gewählt wird.

26. Verfahren nach Anspruch 25, dadurch gekennzeichnet, dass das Mischungsverhältnis der Chemikalien mit dem Ausgangsmaterial etwa den folgenden Gewichtsprozenten entspricht:

| Wasser | 65 % |
|---|---|
| Kalziumchlorid | 20 % |
| Glycerin | 10 % |
| 1,2-Propandiol | 5 % |

27. Verfahren nach Anspruch 26, dadurch gekennzeichnet, dass das Mischungsverhältnis zwischen Ausgangsmaterial und zugesetztem Material zwischen zwanzig und fünfzig Volumenteile des genannten Ausgangsmaterials auf ein Volumenteil des dem Ausgangsmaterial zugesetzten Materials beträgt.

28. Verfahren nach Anspruch 27, dadurch gekennzeichnet, dass das Mischungsverhältnis zwischen der genannten homogenen Mischung und den genannten Materialien Flugasche, Zementofenstaub oder Portlandzement ein bis vier Volumenteile Flugasche, Zementofenstaub oder Portlandzement auf ein Volumenteil der genannten homogenen Mischung beträgt.

29. Verfahren nach Anspruch 28, dadurch gekennzeichnet, dass es sich beim Sonderabfall um Parachlorphenol handelt.

30. Verfahren nach Anspruch 29, dadurch gekennzeichnet, dass als weiterer Verfahrensschritt das Hinzumischen von Wasser zur genannten homogenen Mischung und zum genannten zementartigen Material hinzukommt.

31. Mischung zur Immobilisierung von flüssigem oder halbflüssigem Sonderabfall, der in einem organischen Gemisch enthalten ist, bestehend aus:
Wasser;
Kalziumchlorid;
Glycerin; und
1,2-Propandiol.

32. Mischung nach Anspruch 31, wobei das Mischungsverhältnis der einzelnen Komponenten etwa den folgenden Gewichtsprozenten entspricht:

| Wasser | 65 % |
|---|---|
| Kalziumchlorid | 20 % |
| Glycerin | 10 % |
| 1,2-Propandiol | 5 %. |

33. Mischung nach Anspruch 32, welche ausserdem den in einem organischen Gemisch enthaltenen Sonderabfall beinhaltet.

34. Mischung nach Anspruch 33, wobei der Mischungsanteil des genannten Sonderabfalls im Verhältnis zu den genannten Komponenten zwanzig bis fünfzig Volumenteile zu einem Volumenteil der genannten Komponenten beträgt.

35. Mischung nach Anspruch 34, welche ausserdem zementartiges Material enthält.

36. Mischung nach Anspruch 35, wobei das zementartige Material aus der Gruppe bestehend aus Flugasche, Zementofenstaub und Portlandzement gewählt wird.

37. Mischung nach Anspruch 35, wobei das Mischungsverhältnis zwischen dem genannten zementartigen Material sowie dem Rest der genannten Komponenten und Sonderabfall ein bis vier Volumenteile des genannten zementartigen Materials auf ein Volumenteil der genannten übrigen Komponenten und Sonderabfall beträgt.

38. Mischung nach Anspruch 37, wobei es sich beim Sonderabfall um Parachlorphenol handelt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | US-A-4 909 849 (R.E. FUNDERBUNK) <br> * Insgesamt * <br> --- | 1-38 | A 62 D 3/00 |
| X | EP-A-0 258 088 (URRITECH INTERNATIONAL) <br> * Seite 4, Zeile 12 - Seite 6, Zeile 28; Seite 7, Zeile 18 - Seite 8, Zeile 5; Seite 9, Zeile 25 - Seite 10, Zeile 8; Beispiele; Ansprüche * | 1 | |
| Y | | 1-4,24, 25,31 | |
| Y | US-A-4 818 143 (S.-T. CHOU) <br> * Spalte 2, Zeile 64 - Spalte 3, Zeile 21; Beispiele; Ansprüche * <br> --- | 1-4,24, 25 | |
| A | US-A-4 514 307 (R. CHESTNUT et al.) <br> * Patentansprüche * <br> ----- | 1,24,25 | |

**RECHERCHIERTE SACHGEBIETE (Int. Cl.5)**

A 62 D

Der vorliegende Recherchenbericht wurde für alle Patentansprüche erstellt

| Recherchenort | Abschlußdatum der Recherche | Prüfer |
|---|---|---|
| DEN HAAG | 11-09-1990 | FLETCHER A.S. |